# EUROPEAN PATENT SPECIFICATION

(11) **EP 3 912 064 B1**
(45) Date of publication and mention of the grant of the patent: **25.09.2024**
(21) Application number: 19711074.5
(22) Date of filing: 13.03.2019
(51) Int. Cl.: G06F 21/33, G06F 9/445, G06F 21/44, G06F 21/53, G06F 21/57, G06F 21/62, G06F 21/71, H04L 9/32, H04L 9/40, G06F 8/61, H04L 9/08

(54) **APPARATUS AND METHOD FOR DYNAMIC CONFIGURATION OF TRUSTED APPLICATION ACCESS CONTROL**
VORRICHTUNG UND VERFAHREN ZUR DYNAMISCHEN KONFIGURATION DER STEUERUNG DES ZUGRIFFS AUF EINE SICHERE ANWENDUNG
APPAREIL ET PROCÉDÉ DE CONFIGURATION DYNAMIQUE DE CONTRÔLE D'ACCÈS À UNE APPLICATION DE CONFIANCE

(43) Date of publication of application: 24.11.2021
(73) Proprietor: Huawei Technologies Co., Ltd., Shenzhen, Guangdong 518129 (CN)
(72) Inventor: LAITINEN, Pekka, 16440 Kista (SE); TAMRAKAR, Sandeep, 16440 Kista (SE); LIAN, Gang, 16440 Kista (SE); SOVIO, Sampo, 16440 Kista (SE)
(74) Representative: Pfenning, Meinig & Partner mbB
(86) International application number: PCT/EP2019/056231
(87) International publication number: WO 2020/182302

(56) References cited:
- EP-A1- 3 179 690
- WO-A1-2018/162040
- SOCIO, SAMPO ET AL.: "The Open Trust Protocol (OTrP)", 2 May 2018 (2018-05-02), pages 1 - 74, XP055639244, Retrieved from the Internet <URL:https://tools.ietf.org/id/draft-ietf-teep-opentrustprotocol-00.html> [retrieved on 20191105]

## Description

### TECHNICAL FIELD

The aspects of the present disclosure relate generally to mobile computing apparatus and more particularly to software security within mobile computing apparatus.

### BACKGROUND

Mobile computing apparatus or devices, such as cell phones or other communication enabled mobile computing devices, often include multiple execution environments to enhance security and protect important confidential data and processes. Typically a first execution environment, referred to as a rich execution environment (REE), includes a fully features operating system (OS), such as the Android OS produced by GOOGLE Inc., or iOS produced by APPLE Inc., and a rich set of supporting software services. The REE is used to host user applications where a rich fully featured user experience is required. A second execution environment, referred to as a trusted execution environment (TEE) or a secure execution environment (SEE), includes a much smaller set of software services and often includes hardware based security features to protect confidential data and programs stored within the TEE. The reduced amount of software executing within the TEE improves security by reducing the attack vectors and reducing likelihood of software defects.

Sensitive applications, such as cryptographic operations and related confidential key material, are protected within the TEE, often with the use of hardware based security features. The TEE exposes services through a controlled and well defined interface which may be accessed by client applications (CA) executing within the REE. The trusted applications (TA) expose services that are consumed by the CA. An example of such as CA - TA pair is an Android payment application executing within the REE which needs to access a trusted cryptographic signing application executing within the TEE in order to sign payment transactions with an approved signing key. The signing key is an example of confidential key material that is protected within the TEE. The signing algorithm and signing key remain within the TEE and are not accessible outside the TEE. Only the signing service is accessible through the REE-TEE interface. Malware running in the REE cannot access the private key or the cryptographic services and thus cannot misuse or distribute the signing key or associated cryptographic services. An attacker must use the actual physical device in order to sign a payment message.

An attacker could still compromise the payment process by running a malicious application in the REE that pretends to be a legitimate payment application thereby tricking the payment TA into signing fraudulent messages. Ideally, the TEE or TA would include safeguards to prevent fraudulent use of trusted applications.

One approach is to include a trusted user interface within the TEE so the TA does not need to accept inputs directly from the REE. Adding additional software to the TEE environment increases opportunities for the TEE to be compromised. Also, a trusted user interface will have a distinctly different look and feel from the user interface of the REE applications so a companion portion of the application running in the REE will appear distinctly different leading to a poor user experience.

Alternatively, an access control mechanism may be included in the REE, as is done for example in the SE Android OS produced by GOOGLE Inc., to make the TEE available only for certain REE side CA. Unfortunately these solutions tend to be very complex making them difficult and risky to maintain or modify. Also, these solutions rely on software running in the REE and are therefore susceptible to tampering and cannot provide the high level of security required for some types of TA. Document WO 2018/162040 is a relevant prior art in this field.

Accordingly, it would be desirable to provide methods and apparatus that address at least some of the problems identified above.

### SUMMARY

the invention is defined in the independent claims 1, 8 and 14. It is an object of the disclosed embodiments to provide improved methods and apparatus that can provide secure and efficient access to trusted applications within a mobile computing apparatus. This object is solved by the subject matter of the independent claims. Further advantageous modifications can be found in the dependent claims.

According to a first aspect the above and further objects and advantages are obtained by an apparatus including a processor coupled to a memory wherein the processor and the memory are configured to provide a rich execution environment and a trusted execution environment. The memory and processes in the trusted execution environment are protected from access or modification by applications executing within the rich execution environment. The processor is configured to install, within the rich execution environment, a first client application, wherein the first client application comprises a signature generated based on a service provider private key and to determine that the first client application requires services from a trusted application. The processor is configured to send a request for installation of the trusted application to an outside entity, and to receive, within the rich execution environment, one or more messages, wherein the one or more messages comprise a service provider public key corresponding to the service provider private key, and data for installing the trusted application, and securely transfer the one or more messages to the trusted execution environment. The processor configures within the trusted execution environment a security domain, wherein the security domain is associated with the service provider public key; installs the trusted application within the trusted execution environment; and associates the trusted application with the security domain. The processor configures an access control list within the security domain, wherein access to the trusted application is controlled by the access control list. Configuration of the SD and access control list provides improved security and access control for the TA. Without the specified ACL configuration, access to the TA could be provided by allowing any CA to access the TA or allowing the TA to serve only predefined CAs. Allowing all CA to access the TA creates a serious security risk, and allowing access based on a predefined list is problematic because there would be no way to expose security critical services provided by TA to any new CAs developed after installation of the TA.

In a first possible implementation form of the apparatus according to the first aspect the processor is configured to generate, within the rich execution environment, a request for access to the trusted application from a second client application. The processor identifies the second client application and obtains an application public key corresponding to the second client application from an installation package, wherein the installation package comprises the second client application and the application public key. The processor securely transfers the request for access and the application public key to the trusted execution environment and determines within the trusted execution environment, whether the second client application is authorized to access the trusted application. The determination is based on the application public key and the access control list. When the second client application is authorized, the processor is configured to allow the second client application to access the trusted application. Verifying each request against the access control list provides a reliable means for authorizing every request for access before it is forwarded to the trusted application.

In a possible implementation form of the apparatus according to the first aspect as such or to the first possible implementation form, the application public key comprises an application certificate and the processor is configured to securely transfer the application certificate to the trusted execution environment. Use of an application certificate provides a means to verify the authenticity and integrity of the public key and other information associated with the client application.

In a possible implementation form of the apparatus according to the first aspect the access control list comprises a plurality of application public keys and the processor is configured to allow access to the trusted application based on the plurality of public keys. Including a plurality of public keys in the access control list allows access to the trusted application to be modified without installing updates or multiple copies of the TA.

In a possible implementation form of the apparatus according to the first aspect, the application public key is the same as the service provider public key and the processor is configured to grant or deny access to the trusted application based on the application public key and the access control list. Using the same public key for the client application and the service provider gives assurance that the trusted application, security domain, and client application were all provided by the same source.

In a possible implementation form of the apparatus according to the first aspect, the security domain is associated with a plurality of trusted applications and the processor is configured to grant access to any of the plurality of associated trusted applications based on the access control list. Installing a plurality of trusted applications in a single security domain simplifies access by avoid a proliferation of unnecessary security domains within the TEE.

In a possible implementation form of the apparatus according to the first aspect the apparatus is a mobile communication device. Because mobile communication devices are carried by users at all times it is increasingly important to provide improved security within these devices.

In a possible implementation form of the apparatus according to the first aspect, the processor is configured to determine that a second client application requires access to the trusted application. The processor sends a request to grant access of the second client application to the outside entity, receives within the rich execution environment one or more messages, and securely transfers the one or more messages to the trusted execution environment, wherein the one or more messages comprise an application public key corresponding to the second client application, and data for updating the access control list. The processor updates the access control list based on the application public key, wherein the update is configured to allow access of the second client to the trusted application. Including multiple public keys in the access control list allows multiple client applications to access the same trusted application without installing multiple copies of the trusted application signed by different public keys.

In a possible implementation form of the apparatus according to the first aspect, the access control list includes access rules, and the processor is configured to grant access to the trusted application based on the access rules. Including access rules and/or privileges in the access control list provides a means for improved access control when multiple public keys and/or multiple trusted applications are present in the security domain.

According to a second aspect of the disclosed embodiments the above and further objects and advantages are obtained by a method which includes installing a client application within the rich execution environment, wherein the client application comprises a signature generated based on a service provider private key, and determining that the client application requires services from a trusted application. The method sends a request for installation of the trusted application to an outside entity; receives, within the rich execution environment, one or more messages, wherein the one or more messages comprise a service provider public key corresponding to the service provider private key, and data for installing the trusted application; and securely transfers the one or more messages to the trusted execution environment. The method configures a security domain within the trusted execution environment, wherein the security domain is associated with the service provider public key, installs within the trusted execution environment the trusted application, and associates the trusted application with the security domain. The method configures an access control list within the security domain, wherein access to the trusted application by a client application is controlled by the access control list. Configuration of the SD and access control list provides improved security and access control for the TA.

In a first possible implementation form of the method according to the second aspect, the method generates, within the rich execution environment, a request for access to the trusted application from a second client application, identifies the second client application, and obtains an application public key corresponding to the second client application from an installation package.The installation package comprises the second client application and the corresponding application public key. The method securely transfers the request for access and the application public key to the trusted execution environment, and determines, within the trusted execution environment, whether the second client application is authorized to access the trusted application, wherein the determination is based on the application public key and the access control list. When the second client application is authorized, the method allows the second client application to access the trusted application. Verifying each request against the access control list provides a reliable means for authorizing every request for access before it is forwarded to the trusted application.

In a possible implementation form of the method according to the second aspect, the application public key comprises an application certificate and the method comprises securely transferring the application certificate to the trusted execution environment. Use of an application certificate provides a means to verify the authenticity and integrity of the public key and other information associated with the client application.

In a possible implementation form of the method according to the second aspect as such, the access control list comprises a plurality of public keys and the method allows access to the trusted application based on the plurality of public keys. Including a plurality of public keys in the access control list allows access to the trusted application to be modified without installing updates or multiple copies of the TA.

In a possible implementation form of the method according to the second aspect, the application public key is the same as the service provider public key and the method grants or denies access to the trusted application based on the application public key and the access control list. Using the same public key for the client application and the service provider gives assurance that the trusted application, security domain, and client application were all provided by the same source.

In a possible implementation form of the method according to the second aspect, the security domain is associated with a plurality of trusted applications and the method grants access to any of the plurality of associated trusted applications based on the access control list. Installing a plurality of trusted applications in a single security domain simplifies access by avoiding a proliferation of unnecessary security domains within the TEE.

According to a third aspect of the disclosed embodiments the above and further objects and advantages are obtained by a computer program product including non-transitory computer program instructions that when executed by a processor are configured to cause the processor to perform the method according to the second aspect as such or to any of the possible implementation forms of the second aspect.

These and other aspects, implementation forms, and advantages of the exemplary embodiments will become apparent from the embodiments described herein considered in conjunction with the accompanying drawings. It is to be understood, however, that the description and drawings are designed solely for purposes of illustration and not as a definition of the limits of the disclosed invention, for which reference should be made to the appended claims. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

### BRIEF DESCRIPTION OF THE DRAWINGS

In the following detailed portion of the present disclosure, the invention will be explained in more detail with reference to the example embodiments shown in the drawings, in which:
Figure 1 is a block diagram of a secure software distribution and installation process 100 incorporating aspects of the disclosed embodiments.
Figure 2 is a block diagram of a mobile computing apparatus configured to control access to trusted applications based on an access control list in accordance with aspects of the disclosed embodiments.
Figure 3 is a flow chart of an exemplary method for installing a TA within a TEE and configuring an access control list in accordance with aspects of the disclosed embodiments.
Figure 4 illustrates a flow chart of an exemplary method for granting access to trusted applications incorporating aspects of the disclosed embodiments.

### DETAILED DESCRIPTION OF THE DISCLOSED EMBODIMENTS

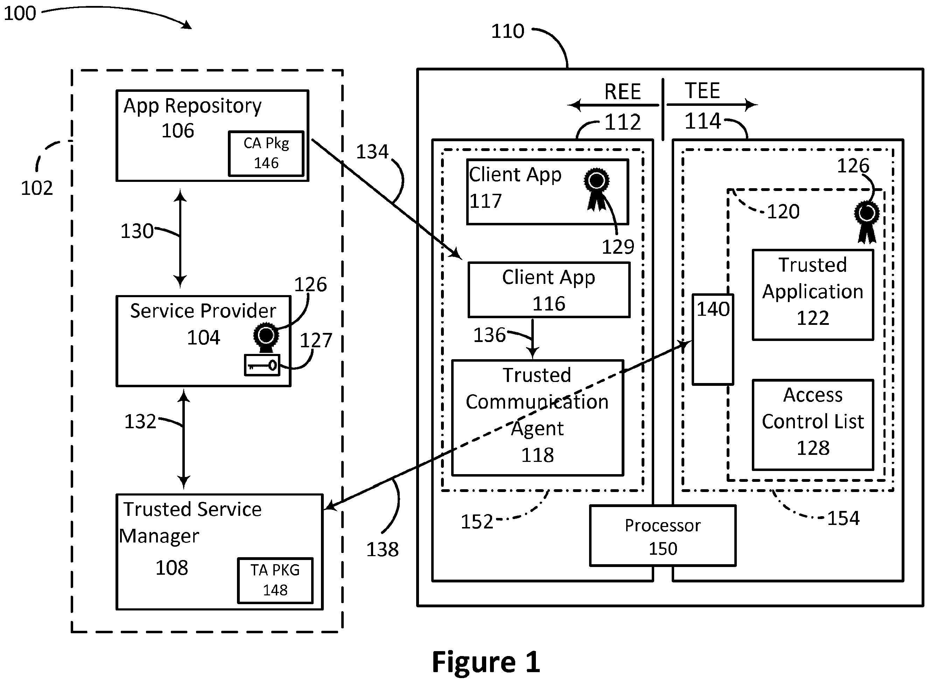

Referring now to Figure 1 there can be seen an illustration of a block diagram showing a secure software distribution and installation system 100 incorporating aspects of the disclosed embodiments. The aspects of the disclosed embodiments are directed to an apparatus 110 that includes a processor 150 coupled to a memory 152, 154. The processor 150 and the memory 152, 154 are configured to provide a rich execution environment (REE) 112 and a trusted execution environment (TEE) 114. The memory 154 and processes 122, 128, 140 in the trusted execution environment 114 are protected from access or modification by applications 116, 117 executing within the rich execution environment 112.

In one embodiment, the processor 150 is configured to install a first client application 116 within the rich execution environment 112, where the first client application comprises a signature generated based on a service provider private key. The processor 150 is also configured to determine that the first client application requires services from a trusted application 122 and then send a request for installation of the trusted application to an outside entity 106.

The processor 150 is configured to receive, within the rich execution environment, one or more messages, wherein the one or more messages comprise a service provider public key corresponding to the service provider private key, and data for installing the trusted application. The processor 150 is also configured to securely transfer the one or more messages to the trusted execution environment 114 and configure, within the trusted execution environment 114 a security domain 120. The security domain 120 is associated with the service provider public key 126.

The processor 150 is configured to install, within the trusted execution environment 114, the trusted application 122, associate the trusted application 122 with the security domain 120 and configure an access control list 128 within the security domain 120. Access to the trusted application 122 is controlled by the access control list 128.

As used herein the term digital signature, or signature, refers to a difficult to reproduce binary value that is cryptographically derived from the content of a computer file, message, or other set of digital data. Signatures provide a means for verifying the authenticity and integrity of a set of digital data. Signatures may be generated based on an industry standard signature algorithm such as the signature algorithms defined in the request for comment 3279 (RFC3279) maintained by the Internet Engineering Task Force (IETF), or may be based on any suitable signature algorithm that allows verification of authenticity and integrity of sets of digital data.

As used herein the terms private key, and public key refer to the two keys in the key pair of an appropriate asymmetric cryptographic algorithm such as Rivest-Shamir-Adleman (RSA) cryptography, elliptic curve cryptography (ECC), or other suitable public key or asymmetric cryptographic algorithms. Data that has been encrypted with a public key may only be decrypted with the associated or corresponding private key from the same cryptographic key pair and vise-versa.

As used herein the term secure transfer or to securely transfer messages or data refers to a means of protecting data or information while being sent or transferred across a computer network. Message and/or data may be securely transferred over a secure communication channel configured or established between two entities. The secure communication channel authenticates both entities and ensures the privacy of messages or data being sent across the secure communication link. A secure transfer may be achieved by setting up a secure communication channel based on a secure protocol, and exchanging information or messages over this secure communication channel. For example, secure socket layer (SSL) and transport layer security (TLS) are protocols that provide privacy and authentication at lower levels of the protocol stack, and can provide a means to securely transfer data across a network. Securing communication at the transport or session layer may provide security sufficient for many applications but may not be adequate for all applications. Optionally information may be securely transferred using higher level protocols, such as the Open Trust Protocol (OTrP) being developed as part of the Global Platform industry initiative, or other proprietary secure protocols. These higher level protocols can include predefined conversations and sessions, and may embed nonce values within each message, thereby securely transferring messages and data with a high degree of confidence in the privacy, authenticity, and integrity of the transferred messages or data. An example of a

As used herein the term security domain refers to a logical construct where a single homogeneous security policy is applied to all security services or TA provided or associated with the security context or domain. A security domain may be configured within a TEE and used to control access to security services provided by one or more TA installed within the security domain. Many secure or trusted protocols, such as the OTrP described above, are configured to support the creation and management of security domains within a TEE as a way to protect certain TA.

Software development companies and software vendors create applications for use on various mobile computing apparatus such as the UE 110. Applications designed to run on UE 110 are distributed using various entities or online services 102 which are external to the UE 110 and accessible from the UE 110 over a variety of private and public computer networks such as the Internet.

When preparing a user application or software application for distribution, the software and data associated with the application are assembled into a distribution package such as an Android package (typically having a .apk file extension) or an iOS application archive (typically having a .ipa file extension). A service provider 104 generates a digital signature based on the distribution package using the service provider's private key 127 and includes the digital signature in the final distribution package 146. The distribution package 146 is then forwarded to an application repository 106 where it is made available for distribution to UE 110. These user applications are designed to run within a REE 112 of the UE 110 and thus can be downloaded 134 directly from the application repository 106 and installed on the device by an OS executing within the REE 112 of the UE 110.

To help protect sensitive information and algorithms, certain portions of software applications handling security sensitive operations and data may be separated into smaller more easily secured applications referred to herein as trusted applications (TA). The TA are often configured to perform cryptographic or other important security operations and may include associated confidential information or key material necessary to perform cryptographic functions. To protect the TA from access, misuse, or tampering by malicious applications the TA are beneficially installed within the TEE.

TA, such as the TA 122, are designed to execute within a TEE 114 and as such require a more secure distribution process. To maintain security and integrity of the UE 110, software executing within the REE 114 of the UE 110 is not authorized or allowed to make modifications to software, data, or configuration of the TEE 114. Preparation of the distribution package 148 for a trusted software application is similar to that of a normal world application where the software developer or vendor assembles all the software and data for the TA into a distribution package and the service provider 104 digitally signs the distribution package 148 using the service provider's private key 127. The TA distribution package 148 is then forwarded to an entity referred to herein as a trusted service manager (TSM) 108.

The TSM 108 is a service or entity external to the UE 110 that is accessible by the UE 110 over a private or public computer network. The TSM 108 has access to confidential material, such as private cryptographic keys, that can be used to identify the TSM 108 to the TEE 114 of a UE 110 as being authorized to make modifications, such as installing TA 122, within the TEE 114. An authorized TSM 108 can download a TA 122 into a TEE 114 on a mobile computing apparatus such as the UE 110, install the TA 122, and make other configuration changes to the environment within the TEE 114 while the mobile computing apparatus is in the field. Trust anchors or other key material may be embedded in the TEE 114 during manufacturing or provisioning of the UE 110 that allows a highly secure network connection to be established between the TEE 114 and the TSM 108. These trust anchors and keys ensure security of the TEE 114 and ensure integrity and privacy of communication between the TEE 114 and the TSM 108. Only an authorized TSM 108 is allowed to modify or communicate with a given TEE 114.

A UE 110 desiring to use an application can contact the application repository 106 and download 134 the desired application package 146. Once downloaded, the application package 146 may be used to install the software application 116 in the REE 112 of the UE 110. The software application 116 will be referred to herein as a client application (CA) 116. The term CA is used because the CA 116 acts as the client side of a standard client-server software model where the CA 116 is configured to send requests that are received and processed by system services, such as the cryptographic or other services provided by the TA 122.

After downloading the desired application package 146, the UE 110 may obtain, preferably through an alternate communication channel, a public key 126 corresponding to the private key 127, and use that public key 126 to validate the desired application package 146. The desired application package 146, which may also be referred to as a distribution package, is used to distribute and install a CA 116. The public key 126, which may be used to validate the distribution package 146, is said to be associated with the CA 116. A public key 126 associated with a CA 116 is referred to herein as an application public key. As used herein the term application public key refers to a public key that is associated with a CA and that may be used to validate the distribution package that was used to distribute the CA.

To support the security needs of highly sensitive applications, the UE 110 is configured to support multiple computing environments as described above. The processor 150 is configured to provide a REE 112 executed within one portion of the memory 152. A TEE 114 runs in a secure area of the main processor 150 and a secure portion of the memory 154 and is configured to provide an isolated execution environment separate from the REE 112 and configured to guarantee integrity and confidentiality of data and program code loaded within the TEE 114. Memory 154 and processes executing within the TEE 114 are protected from modification or access by processes executing within the REE 112.

During or after installation of the CA 116, the OS or other processes executing within the REE 112 may detect that CA 116 requires services from a TA 122. Detection of the need for a TA 122 may occur at the time the CA 116 is installed on the UE 110 or optionally detection may occur at a later time, such as when the CA 116 is executed, or during a scanning or other operation occurring within the REE 112. After detecting the need for a TA 122, the UE 110 will send a message requesting installation of the TA 122 to a trusted service manager (TSM) 108 to obtain the required TA 122.

To support secure transfer, configuration, and installation of the TA 122 within the TEE 114, the TSM 108 sets up a secure communication channel 138 between the TSM 108 and the TEE 114. A trusted communication agent 118 is included in the REE 112 to facilitate establishing the secure communication channel 138. In one embodiment, the secure communication channel 138 may be based on the OTrP discussed above. With OTrP the trusted communication agent 118 is an implementation of an OTrP Agent configured to establish a secure communication channel between the TSM 108 and an OTrP TA 140 executing within the TEE 114.

Installation of the TA 122 within the TEE 114 involves multiple steps which are managed or controlled by the TSM 108. Once the TSM 108 establishes a secure communication channel 138, one or more messages are exchanged between the TSM 108 and the TEE 114 to create a security domain (SD) 120 within the TEE 114, install the TA 122 within the SD 120, and configure an access control list 128 associated with the SD 120.

The SD 120 is associated with the service provider 104 and includes the service provider's public key 126 which may be used to identify and authorize access and management of the SD 120. Optionally the public key 126 may be embedded in a public key certificate such as an X.509 certificate that has been signed, or issued by a trusted certificate authority.

The TSM 108 configures, via the one or more messages, the access control list 128 within or associated with the SD 120. The access control list 128 is beneficially stored in memory 154 protected within the TEE 114 thereby protecting the access control list 128 from modification by applications or software processes executing externally to the TEE 114, such as programs executing in the REE 112.

By including identifying information, such as the public key 126, associated with the CA 116 in the access control list 128, the access control list can be used to determine which CA 116 may be allowed to access the TA 122. When the CA 116 requests access to a particular TA 122, the public key 126, or other identifying information, from the CA 116 is checked against public keys in the access control list 128 to determine whether the CA 116 is authorized to access the requested TA 122. Optionally, the access control list 128 may associate rules or privileges with the identifying information to further guide access to the TA 122.

In certain embodiments it is desirable to allow a second CA 117 to access a TA 122 that is already installed in the SD 120. When the second CA 117 is associated with an application public key 129 that is different than the public key associated with the first CA 116, the second CA 117 may not be allowed to access the SD 120 or TA 122. One approach for allowing the second CA 117 to access the TA 122 would be to create a second SD (not shown) and install a second copy of the TA 122 in the second SD using the same process as described above. However, installing a second copy of TA 122 is wasteful of computing resources and may also introduce additional software related problems such as version control.

The disclosed embodiments provide an improved solution where the access control list 128 is updated to allow the second CA 117 to access the TA 122 that has been previously installed within the SD 120. The access control list 128 may be updated by adding the application public key 129 or other identifying information for the second CA 117.

As discussed above, any modification of the TEE 114 must be made by the TSM 108 via a secure communication channel 138. Configuration of the access control list 128 is initiated by sending a message from the UE 110 to the TSM 108 requesting that the second CA 117 be given access to the TA 122. The TSM 108 establishes a secure channel 138 with the TEE 114 and sends one or more messages over the secure communication channel 138 to update or add the private key 129 or other identifying information to the access control list 128. Optionally access rules or privileges may be configured in the access control list 128 to help guide access control decisions for the second CA 117.

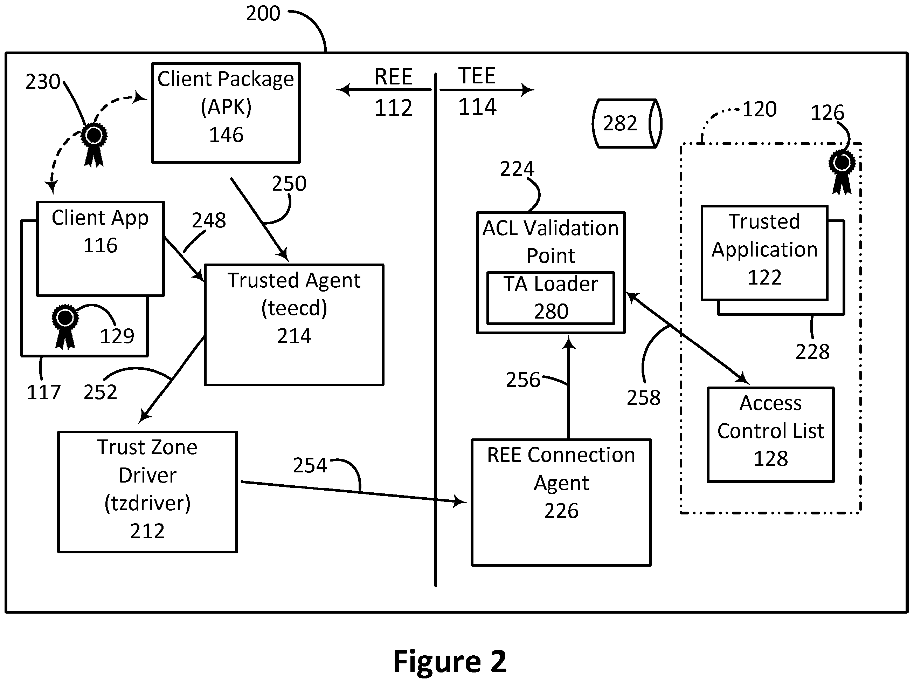

Figure 2 illustrates a block diagram of the UE 200 showing a process for controlling access of CA 116,117 to TA 122, 228 incorporating aspects of the disclosed embodiments. The UE 200 illustrated in Figure 2 is similar to the UE 110 illustrated in Figure 1 where like numerals indicate like elements. The 200 includes a second TA 228 which has been installed within the SD 120 by the TSM 108 in accordance with the processes described above.

In operation, when the CA 116 executing within the REE 112 requires services of a TA 122, the CA 116 generates a request for access 248 to the TA 122. The request for access 248 may be any request for processing by a service supported by the TA 122. For example the request for access 248 may be a request to generate a digital signature for a retail purchase or it may be a request to decrypt a media file, or to encrypt a banking transaction, etc.

A trusted agent or daemon (teecd) 214 receives the request for access 248, identifies the CA 116, and retrieves 250 an application public key or certificate 230 from, for example, an Android manifest. The application certificate 230 uniquely identifies the signer of the client application distribution package 210 and includes a public key which may be used to identify the CA 116. In certain embodiments the certificate 230 may be the service provider 104 certificate and include the service provider public key 126. Optionally the certificate 230 may be different from the service provider 104 certificate but may still include the same public key as the service provider public key 126.

The client certificate 230 and associated request for access 248 are securely transferred 254 to the TEE 114. Any appropriate means for securely transferring the request for access 248 and associated application certificate 230 from the REE 112 to the TEE 114 may be advantageously employed. For example in one embodiment the UE 110 employs the Android OS within the REE 112. With the Android OS example the application certificate 230 may be copied into memory managed by the OS kernel and securely transferred to the TEE 114 through the use of a shared memory space. The request for access 238 is securely transferred 252, 254 through a trust zone driver 212 executing within the OS of the REE 112 and a REE connection agent 226 executing within the TEE 114. Those skilled in the art will readily recognize that any means of securely transferring the request for access 248 along with the application certificate 230 or corresponding public key to the TEE 114 may be advantageously employed without straying from the scope of the disclosed embodiments.

Validation of the request for access 248 and the application certificate 230 and/or public key are carried out within the TEE 114 by an access control list (ACL) validation point process 224. The ACL validation point process 224 checks 258 the public key associated with the request for access 248 against the access control list 128 to determine whether the requested access should be granted. Optionally, the ACL validation point process 224 may be included in a TA loader 280 that is used to load the TA 122 and prepare it for execution within the TEE 114. In one embodiment, the ACL validation point process 224 grants access to the TA 122 when the public key included with the request for access 248 is present in the access control list 128. Alternatively, the ACL validation point process 224 may include additional logic to grant or deny access based on rules or privileges associated with each public key in the access control list 128. When access is granted, the request 248 is passed to the TA 122 for processing, and any result generated by the TA 122 may be returned back to the CA 116.

In certain embodiments the TA 122 may need to be loaded prior to passing the request for access 248 to the TA 122. When loading the TA 122 a TA loader 280 may check the TA installation data 282 to verify a public key included in the TA installation data 282 matches the CA 116 public key 126.

In certain embodiments a second CA 117 associated with a different public key 129 may also require access to the TA 122. As described above, the access control list 128 can be updated to include the public key 129 associated with the second CA 117. The ACL validation point 224 can then be configured to grant access based on the second public key 129 in the access control list 129.

In certain embodiments, multiple TA 122, 228 may be installed within a single SD 120. When an SD 120 includes multiple TA 122, 228 it may be desirable to allow certain CA 116, to access both TA 122, 228, and to limit the second CA 117 to access only the second TA 228. These additional access rules may be used for example to determine which CA 116, 117 can access which TA 122, 228. Optionally the access rules may provide finer grained control to allow one CA 116 access to a certain set of services provided by the TA 122 and to allow a second client application 117 access to a different set of services provided by the TA 122.

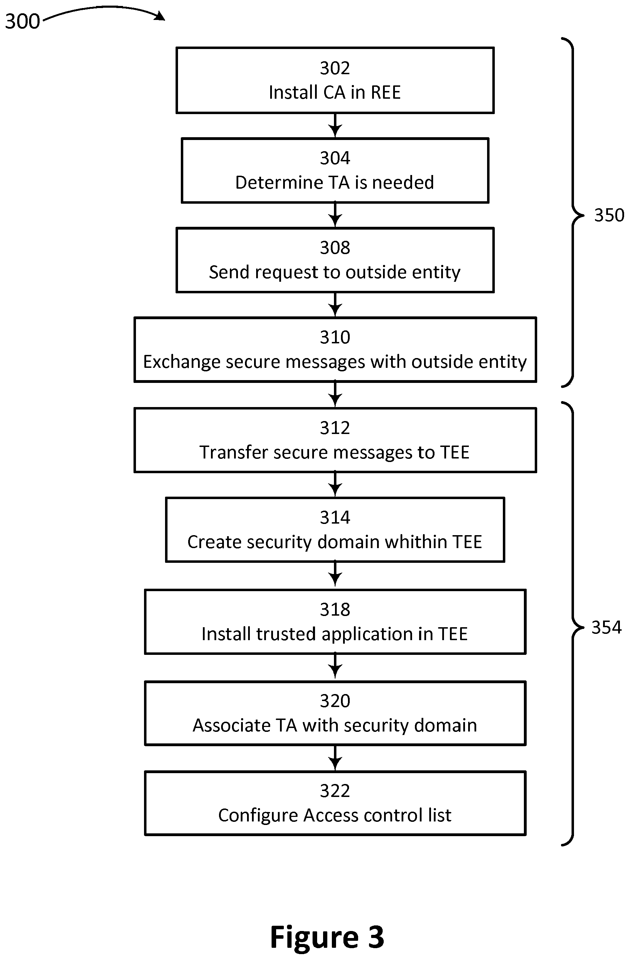

Figure 3 illustrates an exemplary method 300 for installing a TA within a TEE and configuring an access control list incorporating aspects of the disclosed embodiments. The exemplary method 300 begins when a CA is installed 302 within the REE of a mobile computing apparatus or UE. At the time the CA is installed the UE may determine 304 that the services of a TA are required. Optionally the UE may determine 304 at some time after installation such as when the CA is loaded and executed.

The UE sends a request 308 to an outside entity such as a TSM to obtain the required TA. To protect the security of the TEE, programs executing outside the TEE, such as user application or OS services executing within the REE, are not authorized to make modifications to the data, program code, or configuration of the TEE. The outside entity or TSM possesses confidential material, such as private keys, that identify it as having authority to install TA and modify the data and configuration of the TEE on a particular UE.

A secure communication channel, such as the secure communication channel 138 described above, is established between the outside entity and the TEE. Various components executing within a REE may participate in establishing the secure communication channel, however none of these components have the ability to view or modify any of the messages passing through the secure communication channel. All messages exchanged between the outside entity and the UE are securely transferred to the TEE 312.

The secure communication channel between the UE and the outside entity may be based on any appropriate type of computer network such as an air interface or hardware based network. Examples of an appropriate air interface are any of the mobile phone air interface standards such as LTE, LTE advanced, etc. or a wireless network such as WiFi, or any other air based interface that can support a computer network. A hardware based network is any computer networking approach that use copper, fiber, or other physical connections between network nodes.

A security domain is created 314 within the TEE. The security domain creates a logical separation or container configured to provide an isolated space within the TEE where programs and data may be protected from access or tampering by programs not having permission within the security domain.

The TA is installed 318 within and associated with the security domain 320. Associating the TA with a security domain protects the TA by allowing only processes that are authorized to access the security domain to access the TA.

An access control list is created and/or configured within each security domain 322. The access control list is used by an ACL validation point or similar process to determine whether a request for access should be granted for a particular TA. The access control list may include a list of public keys or other information suitable for identifying which CA are authorized to access TA within the SD. Optionally the access control list may include additional rules or permissions associated with each public key to further guide access determinations.

In certain embodiments it is desirable to allow a second CA to access a TA that is installed within the SD. This can be achieved by updating the access control list to include the public key or other identifying information associated with the second CA. The UE can, when desired, send a message to a TSM or other outside entity authorized to access and modify the TEE. In response the TSM or other outside entity can establish a secure communication channel with the TEE and update the access control list to include the additional public key or other required information.

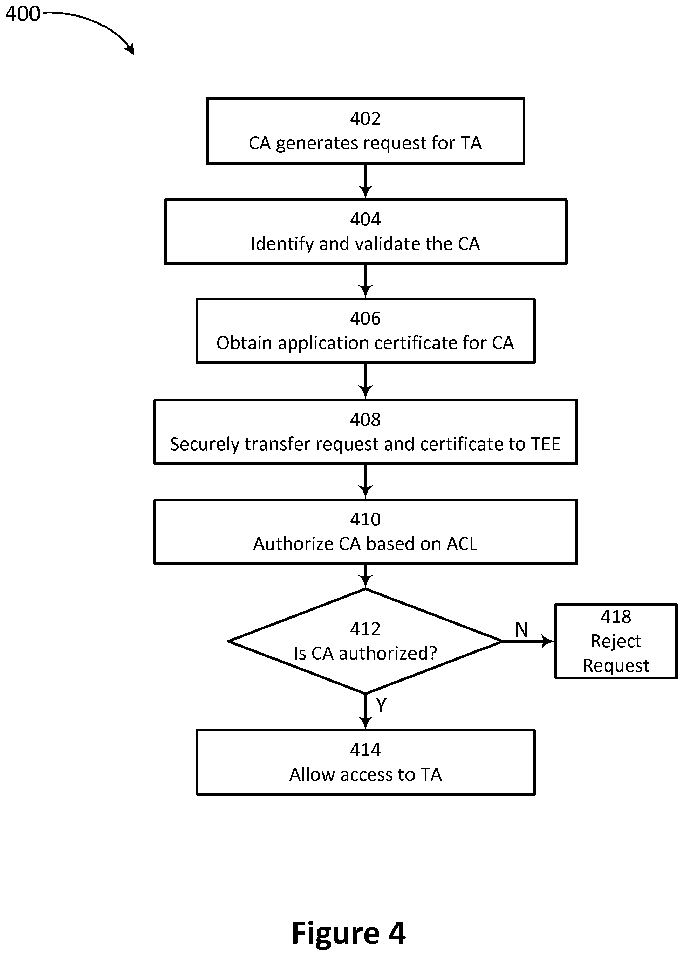

Figure 4 illustrates a flow chart of an exemplary method 400 for granting access to trusted applications incorporating aspects of the disclosed embodiments. As an aid to understanding the exemplary method 400 will be described below with respect to a UE based on the Android OS. Those skilled in the art will readily recognize that the exemplary method 400 may be advantageously employed to control access to a TA on any UE having a REE and a TEE without straying from the scope of the disclosed embodiments.

When a CA executing within the REE of a UE requires services from a TA, it generates 402 a request for access including any information necessary for the TA to process the requested operations. Processes executing in the REE, such as components of the OS, identify and validate 404 the CA and the request for access. The public key and optionally the application certificate associated with the CA is obtained 406 for example by retrieving the application certificate from an Android manifest associated with the CA. The request for access along with the public key or application certificate is securely transferred 410 to the TEE. An ACL validation point process executing within the TEE receives the request for access along with the public key of the CA and determines whether the CA is authorized 410 to access the TA. This determination may be based on the public key or other identifying information included with the request for access, and an access control list associated with the SD in which the TA is installed. When the ACL validation point determines that access should be granted 412-Y, the request for access is forwarded 414 to the TA, and when access is denied 412-N the request for access is rejected 418.

In certain embodiments the access control list includes a plurality public keys or identifying information. When this is the case, a second CA having a different public key than the SD, may be granted access when one of the plurality of public keys in the access control list corresponds to the public key of the second CA.

Optionally, the SD may have more than one TA installed. The ACL validation point may be configured to grant access to one or more of the TA based the public key associated with the request for access.

Thus, while there have been shown, described and pointed out, fundamental novel features of the invention as applied to the exemplary embodiments thereof, it will be understood that various omissions, substitutions and changes in the form and details of apparatus and methods illustrated, and in their operation, may be made by those skilled in the art without departing from the scope of the presently disclosed invention. Further, it is expressly intended that all combinations of those elements, which perform substantially the same function in substantially the same way to achieve the same results, are within the scope of the invention. Moreover, it should be recognized that structures and/or elements shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. An apparatus (110) comprising a processor (150) coupled to a memory (152, 154) wherein the processor (150) and the memory (152, 154) are configured to provide a rich execution environment (112) and a trusted execution environment (114), wherein the memory (154) and processes (122, 128, 140) in the trusted execution environment (114) are protected from access or modification by applications (116, 117) executing within the rich execution environment (112), and wherein the processor (150) is configured to:
install, within the rich execution environment (112), a first client application (116), wherein the first client application comprises a signature generated based on a service provider private key;
determine that the first client application requires services from a trusted application (122);
send a request for installation of the trusted application to an outside entity (106);
receive, within the rich execution environment (112), one or more messages, wherein the one or more messages comprise a service provider public key corresponding to the service provider private key, and data for installing the trusted application;
securely transfer the one or more messages to the trusted execution environment (114);
configure, within the trusted execution environment (114) a security domain (120), wherein the security domain (120) is associated with the service provider public key (126);
install, within the trusted execution environment (114), the trusted application (122);
associate the trusted application (122) with the security domain (120); and
configure an access control list (128) within the security domain (120), wherein access to the trusted application (122) is controlled by the access control list (128).

2. The apparatus (110) of claim 1 wherein the processor (150) is configured to:
generate, within the rich execution environment (112), a request for access to the trusted application (122) from the first client application (116);
identify the first client application (116);
obtain an application public key corresponding to the first client application from an installation package (146), wherein the installation package (146) comprises the first client application (116) and the application public key;
securely transfer the request for access and the application public key to the trusted execution environment (114);
determine, within the trusted execution environment (114), whether the first client application (116) is authorized to access the trusted application (122), wherein the determination is based on the application public key and the access control list (128); and
when the first client application (116) is authorized, allow the first client application (116) to access the trusted application (128).

3. The apparatus (110) of claim 2 wherein the application public key comprises an application certificate and the processor is configured to securely transfer the application certificate to the trusted execution environment (114).

4. The apparatus (110) of any of the preceding claims wherein the access control list (128) comprises a plurality of application public keys and the processor (150) is configured to allow access to the trusted application (122) based on the plurality of public keys.

5. The apparatus (110) of any of claims 2 or 3 wherein the application public key is the same as the service provider public key (126) and wherein the processor (150) is configured to grant or deny access to the trusted application (122) based on the application public key and the access control list (128).

6. The apparatus (110) of any of the preceding claims wherein the security domain is associated with a plurality of trusted applications (122, 228) and the processor is configured to grant access to one or more of the plurality of associated trusted applications (122, 228) based on the access control list (128).

7. The apparatus (110) of any of the preceding claims wherein the apparatus (110) is a mobile communication device.

8. A method (300) comprising:
installing (302), within a rich execution environment, a client application, wherein the client application comprises a signature generated based on a service provider private key;
determining (304) that the client application requires services from a trusted application;
sending (308) a request for installation of the trusted application to an outside entity;
receiving (310), within the rich execution environment, one or more messages, wherein the one or more messages comprise a service provider public key corresponding to the service provider private key, and data for installing the trusted application;
securely transferring (312) the one or more messages to the trusted execution environment;
configuring (314), within the trusted execution environment a security domain, wherein the security domain is associated with the service provider public key;
installing (318), within the trusted execution environment, the trusted application;
associating (320) the trusted application with the security domain; and
configuring (322) an access control list within the security domain, wherein access to the trusted application by a client application is controlled by the access control list.

9. The method (300) of claim 8 wherein the method (300) further comprises:
generating (402), within the rich execution environment, a request for access to the trusted application from a second client application;
identifying (404) the second client application;
obtaining (406) an application public key corresponding to the second client application from an installation package, wherein the installation package comprises the second client application and the corresponding application public key;
securely transferring (408) the request for access and the application public key to the trusted execution environment;
determining (410), within the trusted execution environment, whether the second client application is authorized to access the trusted application, wherein the determination is based on the application public key and the access control list; and
when the second client application is authorized, allowing (414) the second client application to access the trusted application.

10. The method (300) of claim 9 wherein the application public key comprises an application certificate and the method comprises securely transferring the application certificate to the trusted execution environment.

11. The method (300) of claims 8 through 10 wherein the access control list comprises a plurality of public keys and the method comprises allowing access to the trusted application based on the plurality of public keys.

12. The method (300) of claims 9 or 10 wherein the application public key is the same as the service provider public key and wherein the method comprises granting or denying access to the trusted application based on the application public key and the access control list.

13. The method (300) of claims 8 through 12 wherein the security domain is associated with a plurality of trusted applications and the method comprises granting access to any of the plurality of associated trusted applications based on the access control list.

14. A computer program product comprising non-transitory computer program instructions that when executed by a processor (150) are configured to cause the processor (150) to perform the method according to any of claims 8 through 13.

## Patentansprüche

1. Vorrichtung (110), die einen Prozessor (150) umfasst, der mit einem Speicher (152, 154) gekoppelt ist, wobei der Prozessor (150) und der Speicher (152, 154) dazu konfiguriert sind, eine umfangreiche Ausführungsumgebung (112) und eine vertrauenswürdige Ausführungsumgebung (114) bereitzustellen, wobei der Speicher (154) und die Prozesse (122, 128, 140) in der vertrauenswürdigen Ausführungsumgebung (114) vor Zugriff oder Änderung durch Anwendungen (116, 117) geschützt sind, die innerhalb der umfangreichen Ausführungsumgebung (112) ausgeführt werden, und wobei der Prozessor (150) dazu konfiguriert ist:
eine erste Client-Anwendung (116) innerhalb der umfangreichen Ausführungsumgebung (112) zu installieren, wobei die erste Client-Anwendung eine Signatur umfasst, die basierend auf einem privaten Schlüssel eines Dienstanbieters generiert wird;
zu bestimmen, dass die erste Client-Anwendung Dienste von einer vertrauenswürdigen Anwendung (122) benötigt;
eine Anforderung zur Installation der vertrauenswürdigen Anwendung an eine externe Entität (106) zu senden;
eine oder mehrere Nachrichten innerhalb der umfangreichen Ausführungsumgebung (112) zu empfangen, wobei die eine oder mehreren Nachrichten einen öffentlichen Schlüssel eines Dienstanbieters entsprechend dem privaten Schlüssel des Dienstanbieters und Daten zum Installieren der vertrauenswürdigen Anwendung umfassen;
die eine oder mehreren Nachrichten sicher an die vertrauenswürdige Ausführungsumgebung (114) zu übertragen;
eine Sicherheitsdomäne (120) innerhalb der vertrauenswürdigen Ausführungsumgebung (114) zu konfigurieren, wobei die Sicherheitsdomäne (120) dem öffentlichen Schlüssel (126) des Dienstanbieters zugeordnet ist;
die vertrauenswürdige Anwendung (122) innerhalb der vertrauenswürdigen Ausführungsumgebung (114) zu installieren;
die vertrauenswürdige Anwendung (122) der Sicherheitsdomäne (120) zuzuordnen; und
eine Zugriffssteuerliste (128) innerhalb der Sicherheitsdomäne (120) zu konfigurieren, wobei der Zugriff auf die vertrauenswürdige Anwendung (122) durch die Zugriffssteuerliste (128) gesteuert wird.

2. Vorrichtung (110) nach Anspruch 1, wobei der Prozessor (150) dazu konfiguriert ist:
eine Anforderung zum Zugriff auf die vertrauenswürdige Anwendung (122) von der ersten Client-Anwendung (116) innerhalb der umfangreichen Ausführungsumgebung (112) zu generieren;
die erste Client-Anwendung (116) zu identifizieren;
einen öffentlichen Schlüssel einer Anwendung entsprechend der ersten Client-Anwendung aus einem Installationspaket (146) zu erlangen, wobei das Installationspaket (146) die erste Client-Anwendung (116) und den öffentlichen Schlüssel der Anwendung umfasst;
die Anforderung zum Zugriff und den öffentlichen Schlüssel der Anwendung sicher an die vertrauenswürdige Ausführungsumgebung (114) zu übertragen;
innerhalb der vertrauenswürdigen Ausführungsumgebung (114) zu bestimmen, ob die erste Client-Anwendung (116) autorisiert ist, auf die vertrauenswürdige Anwendung (122) zuzugreifen, wobei die Bestimmung auf dem öffentlichen Schlüssel der Anwendung und der Zugriffssteuerliste (128) basiert; und
wenn die erste Client-Anwendung (116) autorisiert ist, der ersten Client-Anwendung (116) zu gestatten, auf die vertrauenswürdige Anwendung (128) zuzugreifen.

3. Vorrichtung (110) nach Anspruch 2, wobei der öffentliche Schlüssel der Anwendung ein Anwendungszertifikat umfasst und der Prozessor dazu konfiguriert ist, das Anwendungszertifikat sicher an die vertrauenswürdige Ausführungsumgebung (114) zu übertragen.

4. Vorrichtung (110) nach einem der vorhergehenden Ansprüche, wobei die Zugriffssteuerliste (128) eine Vielzahl von öffentlichen Schlüsseln der Anwendung umfasst und der Prozessor (150) dazu konfiguriert ist, den Zugriff auf die vertrauenswürdige Anwendung (122) basierend auf der Vielzahl von öffentlichen Schlüsseln zu gestatten.

5. Vorrichtung (110) nach einem der Ansprüche 2 oder 3, wobei der öffentliche Schlüssel der Anwendung derselbe wie der öffentliche Schlüssel (126) des Dienstanbieters ist und wobei der Prozessor (150) dazu konfiguriert ist, den Zugriff auf die vertrauenswürdige Anwendung (122) basierend auf dem öffentlichen Schlüssel der Anwendung und der Zugriffssteuerliste (128) zu gewähren oder zu verweigern.

6. Vorrichtung (110) nach einem der vorhergehenden Ansprüche, wobei die Sicherheitsdomäne einer Vielzahl von vertrauenswürdigen Anwendungen (122, 228) zugeordnet ist und der Prozessor dazu konfiguriert ist, basierend auf der Zugriffssteuerliste (128) Zugriff auf eine oder mehrere der Vielzahl von zugeordneten vertrauenswürdigen Anwendungen (122, 228) zu gewähren.

7. Vorrichtung (110) nach einem der vorhergehenden Ansprüche, wobei die Vorrichtung (110) eine mobile Kommunikationsvorrichtung ist.

8. Verfahren (300), umfassend:
Installieren (302) einer ersten Client-Anwendung innerhalb der umfangreichen Ausführungsumgebung, wobei die erste Client-Anwendung eine Signatur umfasst, die basierend auf einem privaten Schlüssel eines Dienstanbieters generiert wird;
Bestimmen (304), dass die Client-Anwendung Dienste von einer vertrauenswürdigen Anwendung benötigt;
Senden (308) einer Anforderung zur Installation der vertrauenswürdigen Anwendung an eine externe Entität;
Empfangen (310) einer oder mehrerer Nachrichten innerhalb der umfangreichen Ausführungsumgebung, wobei die eine oder mehreren Nachrichten einen öffentlichen Schlüssel eines Dienstanbieters entsprechend dem privaten Schlüssel des Dienstanbieters und Daten zum Installieren der vertrauenswürdigen Anwendung umfassen;
sicheres Übertragen (312) der einen oder mehreren Nachrichten an die vertrauenswürdige Ausführungsumgebung;
Konfigurieren (314) einer Sicherheitsdomäne innerhalb der vertrauenswürdigen Ausführungsumgebung, wobei die Sicherheitsdomäne dem öffentlichen Schlüssel des Dienstanbieters zugeordnet ist;
Installieren (318) der vertrauenswürdigen Anwendung innerhalb der vertrauenswürdigen Ausführungsumgebung;
Zuordnen (320) der vertrauenswürdigen Anwendung zu der Sicherheitsdomäne; und
Konfigurieren (322) einer Zugriffssteuerliste innerhalb der Sicherheitsdomäne, wobei der Zugriff auf die vertrauenswürdige Anwendung durch eine Client-Anwendung durch die Zugriffssteuerliste gesteuert wird.

9. Verfahren (300) nach Anspruch 8, wobei das Verfahren (300) ferner Folgendes umfasst:
Generieren (402) einer Anforderung zum Zugriff auf die vertrauenswürdige Anwendung von einer zweiten Client-Anwendung innerhalb der umfangreichen Ausführungsumgebung;
Identifizieren (404) der zweiten Client-Anwendung;
Erlangen (406) eines öffentlichen Schlüssels einer Anwendung entsprechend der zweiten Client-Anwendung aus einem Installationspaket, wobei das Installationspaket die zweite Client-Anwendung und den entsprechenden öffentlichen Schlüssel der Anwendung umfasst;
sicheres Übertragen (408) der Anforderung zum Zugriff und des öffentlichen Schlüssels der Anwendung an die vertrauenswürdige Ausführungsumgebung;
Bestimmen (410) innerhalb der vertrauenswürdigen Ausführungsumgebung, ob die zweite Client-Anwendung autorisiert ist, auf die vertrauenswürdige Anwendung zuzugreifen, wobei die Bestimmung auf dem öffentlichen Schlüssel der Anwendung und der Zugriffssteuerliste basiert; und
wenn die zweite Client-Anwendung autorisiert ist, Gestatten (414) der zweiten Client-Anwendung, auf die vertrauenswürdige Anwendung zuzugreifen.

10. Verfahren (300) nach Anspruch 9, wobei der öffentliche Schlüssel der Anwendung ein Anwendungszertifikat umfasst und das Verfahren sicheres Übertragen des Anwendungszertifikats an die vertrauenswürdige Ausführungsumgebung umfasst.

11. Verfahren (300) nach den Ansprüchen 8 bis 10, wobei die Zugriffssteuerliste eine Vielzahl von öffentlichen Schlüsseln umfasst und das Verfahren Gestatten von Zugriff auf die vertrauenswürdige Anwendung basierend auf der Vielzahl von öffentlichen Schlüsseln umfasst.

12. Verfahren (300) nach Anspruch 9 oder 10, wobei der öffentliche Schlüssel der Anwendung derselbe wie der öffentliche Schlüssel des Dienstanbieters ist und wobei das Verfahren Gewähren oder Verweigern von Zugriff auf die vertrauenswürdige Anwendung basierend auf dem öffentlichen Schlüssel der Anwendung und der Zugriffssteuerliste umfasst.

13. Verfahren (300) nach Anspruch 8 bis 12, wobei die Sicherheitsdomäne einer Vielzahl von vertrauenswürdigen Anwendungen zugeordnet ist und das Verfahren Gewähren von Zugriff auf jede der Vielzahl von zugeordneten vertrauenswürdigen Anwendungen basierend auf der Zugriffssteuerliste umfasst.

14. Computerprogrammprodukt, das nichttransitorische Computerprogrammanweisungen umfasst, die bei Ausführung durch einen Prozessor (150) dazu konfiguriert sind, den Prozessor (150) dazu zu veranlassen, das Verfahren nach einem der Ansprüche 8 bis 13 durchzuführen.

## Revendications

1. Appareil (110) comprenant un processeur (150) couplé à une mémoire (152, 154), dans lequel le processeur (150) et la mémoire (152, 154) sont configurés pour fournir un environnement d'exécution riche (112) et un environnement d'exécution de confiance (114), dans lequel la mémoire (154) et les processus (122, 128, 140) dans l'environnement d'exécution de confiance (114) sont protégés contre l'accès ou la modification par des applications (116, 117) s'exécutant au sein de l'environnement d'exécution riche (112), et dans lequel le processeur (150) est configuré pour :
installer, au sein de l'environnement d'exécution riche (112), une première application client (116), dans lequel la première application client comprend une signature générée sur la base d'une clé privée de fournisseur de services ;
déterminer que la première application client nécessite des services d'une application de confiance (122) ;
envoyer une demande d'installation de l'application de confiance à une entité extérieure (106) ;
recevoir, au sein de l'environnement d'exécution riche (112), un ou plusieurs messages, dans lequel les un ou plusieurs messages comprennent une clé publique de fournisseur de services correspondant à la clé privée de fournisseur de services, et des données pour installer l'application de confiance ;
transférer de manière sécurisée les un ou plusieurs messages vers l'environnement d'exécution de confiance (114) ;
configurer, au sein de l'environnement d'exécution de confiance (114), un domaine de sécurité (120), dans lequel le domaine de sécurité (120) est associé à la clé publique de fournisseur de services (126) ;
installer, au sein de l'environnement d'exécution de confiance (114), l'application de confiance (122) ;
associer l'application de confiance (122) au domaine de sécurité (120) ; et
configurer une liste de contrôle d'accès (128) au sein du domaine de sécurité (120), dans lequel l'accès à l'application de confiance (122) est contrôlé par la liste de contrôle d'accès (128) .

2. Appareil (110) selon la revendication 1, dans lequel le processeur (150) est configuré pour :
générer, au sein de l'environnement d'exécution riche (112), une demande d'accès à l'application de confiance (122) à partir de la première application client (116) ;
identifier la première application client (116) ;
obtenir une clé publique d'application correspondant à la première application client à partir d'un package d'installation (146), dans lequel le package d'installation (146) comprend la première application client (116) et la clé publique d'application ;
transférer de manière sécurisée la demande d'accès et la clé publique d'application vers l'environnement d'exécution de confiance (114) ;
déterminer, au sein de l'environnement d'exécution de confiance (114), si la première application client (116) est autorisée à accéder à l'application de confiance (122), dans lequel la détermination est basée sur la clé publique d'application et la liste de contrôle d'accès (128) ; et
lorsque la première application client (116) est autorisée, permettre à la première application client (116) d'accéder à l'application de confiance (128).

3. Appareil (110) selon la revendication 2, dans lequel la clé publique d'application comprend un certificat d'application et le processeur est configuré pour transférer de manière sécurisée le certificat d'application vers l'environnement d'exécution de confiance (114).

4. Appareil (110) selon l'une quelconque des revendications précédentes, dans lequel la liste de contrôle d'accès (128) comprend une pluralité de clés publiques d'application et le processeur (150) est configuré pour permettre l'accès à l'application de confiance (122) sur la base de la pluralité de clés publiques.

5. Appareil (110) selon l'une quelconque des revendications 2 ou 3, dans lequel la clé publique d'application est la même que la clé publique de fournisseur de services (126) et dans lequel le processeur (150) est configuré pour accorder ou refuser l'accès à l'application de confiance (122) sur la base de la clé publique d'application et de la liste de contrôle d'accès (128).

6. Appareil (110) selon l'une quelconque des revendications précédentes, dans lequel le domaine de sécurité est associé à une pluralité d'applications de confiance (122, 228) et le processeur est configuré pour accorder l'accès à une ou plusieurs de la pluralité d'applications de confiance (122, 228) associées sur la base de la liste de contrôle d'accès (128).

7. Appareil (110) selon l'une quelconque des revendications précédentes, dans lequel l'appareil (110) est un dispositif de communication mobile.

8. Procédé (300) comprenant :
l'installation (302), au sein de l'environnement d'exécution riche, d'une application client, dans lequel l'application client comprend une signature générée sur la base d'une clé privée de fournisseur de services ;
la détermination (304) que l'application client nécessite des services d'une application de confiance ;
l'envoi (308) d'une demande d'installation de l'application de confiance à une entité extérieure ;
la réception (310), au sein de l'environnement d'exécution riche, d'un ou de plusieurs messages, dans lequel les un ou plusieurs messages comprennent une clé publique de fournisseur de services correspondant à la clé privée de fournisseur de services, et des données pour installer l'application de confiance ;
le transfert de manière sécurisée (312) des un ou plusieurs messages vers l'environnement d'exécution de confiance ;
la configuration (314), au sein de l'environnement d'exécution de confiance d'un domaine de sécurité, dans lequel le domaine de sécurité est associé à la clé publique de fournisseur de services ;
l'installation (318), au sein de l'environnement d'exécution sécurisé, de l'application sécurisée ;
l'association (320) de l'application de confiance au domaine de sécurité ; et
la configuration (322) d'une liste de contrôle d'accès au sein du domaine de sécurité, dans lequel l'accès à l'application de confiance par une application client est contrôlé par la liste de contrôle d'accès.

9. Procédé (300) selon la revendication 8, dans lequel le procédé (300) comprend également :
la génération (402), au sein de l'environnement d'exécution riche, d'une demande d'accès à l'application de confiance à partir d'une seconde application client ;
l'identification (404) de la seconde application client ;
l'obtention (406) d'une clé publique d'application correspondant à la seconde application client à partir d'un package d'installation, dans lequel le package d'installation comprend la seconde application client et la clé publique d'application correspondante ;
le transfert de manière sécurisée (408) de la demande d'accès et la clé publique d'application vers l'environnement d'exécution de confiance ;
la détermination (410), au sein de l'environnement d'exécution de confiance, du fait de savoir si la seconde application client est autorisée à accéder à l'application de confiance, dans lequel la détermination est basée sur la clé publique d'application et la liste de contrôle d'accès ; et
lorsque la seconde application client est autorisée, le fait de permettre (414) à la seconde application client d'accéder à l'application de confiance.

10. Procédé (300) selon la revendication 9, dans lequel la clé publique d'application comprend un certificat d'application et le procédé comprend le transfert sécurisé du certificat d'application vers l'environnement d'exécution de confiance.

11. Procédé (300) selon les revendications 8 à 10, dans lequel la liste de contrôle d'accès comprend une pluralité de clés publiques et le procédé comprend le fait de permettre l'accès à l'application de confiance sur la base de la pluralité de clés publiques.

12. Procédé (300) selon les revendications 9 ou 10, dans lequel la clé publique d'application est la même que la clé publique de fournisseur de services et dans lequel le procédé comprend l'octroi ou le refus de l'accès à l'application de confiance sur la base de la clé publique d'application et de la liste de contrôle d'accès.

13. Procédé (300) selon les revendications 8 à 12, dans lequel le domaine de sécurité est associé à une pluralité d'applications de confiance et le procédé comprend l'octroi d'un accès à l'une quelconque de la pluralité d'applications de confiance associées sur la base de la liste de contrôle d'accès.

14. Produit de programme informatique comprenant des instructions de programme informatique non transitoire qui, lorsqu'elles sont exécutées par un processeur (150), sont configurées pour amener le processeur (150) à mettre en œuvre le procédé selon l'une quelconque des revendications 8 à 13.
